# DEMANDE DE BREVET EUROPEEN

(11) **EP 3 708 348 A1**
(43) Date de publication de la demande: **16.09.2020**
(21) Numéro de dépôt: 20160344.6
(22) Date de dépôt: 20.06.2017
(51) Int. Cl.: B29C 70/48, B29C 70/54, B29C 70/38, B29C 70/08, B29B 11/16, B62D 1/16, H01M 2/10, B62D 29/04, B62D 25/14

(54) **PROCEDE DE FABRICATION D'UNE PIECE EN MATERIAU COMPOSITE A MATRICE ORGANIQUE ET RENFORT FIBREUX POUR BATTERIE**

(30) Priorité: 20.06.2016 FR 1655722
(62) Demande divisionnaire de: 17730212.2
(71) Demandeur: Institut de Recherche Technologique Jules Verne, 44340 Bouguenais (FR)
(72) Inventeur: KNEVELER, Matthieu, 44840 LES SORINIERES (FR); LEROUX, Charles, 78830 BULLION (FR); ROTA, Laurent, 91530 SAINT CHERON (FR)
(74) Mandataire: Nony

(57) **Abrégé**

Procédé de fabrication d'une pièce (1 ; 5) en matériau composite à matrice organique et renfort fibreux pour batterie (75), le procédé comportant les étapes suivantes :
a) draper de manière automatique, respectivement à plat ou en forme sur une empreinte tridimensionnelle (E'), au moins une stratification (30, 31 ; 51, 52) comportant au moins un premier et un deuxième plis secs, différents, au moins partiellement superposés, de manière à former une préforme sèche, respectivement à plat ou tridimensionnelle, chaque pli étant fibreux, les plis différant entre eux par la structure, le positionnement sur la préforme, les fibres les constituant et/ou la géométrie du pli, le positionnement des plis entre eux étant défini de manière à ménager au moins une zone, ayant une fonction, entre les plis,
b) thermoformer la préforme, le thermoformage s'effectuant, lorsqu'elle a été drapée à plat à l'étape a), dans une empreinte tridimensionnelle d'un premier moule afin de lui conférer une forme en trois dimensions,
c) imprégner au sein d'un moule la préforme ainsi thermoformée par au moins un polymère, la préforme étant déplacée en cas de drapage à plat à l'étape a) du premier moule de thermoformage à un deuxième moule pour l'imprégnation.

## Description

### Domaine de l'invention

La présente invention concerne un procédé de fabrication d'une pièce en matériau composite à matrice organique et renfort fibreux, en particulier mais non exclusivement dans le domaine automobile ou aéronautique.

L'invention concerne également un support de colonne de direction et une traverse inférieure de baie réalisés notamment à l'aide d'un tel procédé de fabrication.

### Art antérieur

Dans l'industrie automobile, de nombreuses pièces sont réalisées en métal, et on cherche actuellement à substituer le matériau composite à matrice organique au métal, notamment pour alléger le poids et donc la consommation en carburant du véhicule ou améliorer la longévité des batteries dans le cas d'un véhicule à motorisation hybride ou électrique. Il est nécessaire pour ce faire que les performances mécaniques obtenues soient comparables, que les cadences de fabrication soient suffisamment élevées pour pouvoir être mises en œuvre sur une chaîne de construction automobile et que le coût global soit comparativement acceptable voire favorable.

On connaît par WO 2013/182521 le remplacement d'une traverse tubulaire métallique par une traverse en matériau composite fibré. Une telle traverse nécessite une grande quantité de matériau composite pour obtenir les mêmes propriétés mécaniques que la traverse métallique, ce qui augmente les coûts de fabrication, le poids et le volume de l'ensemble.

WO 2015/090989 concerne une traverse de planche de bord pour véhicule automobile associée à deux supports latéraux, la traverse comportant un tube dont au moins une partie est en matière plastique composite et l'un des supports latéraux est en matière plastique composite, ladite matière plastique composite étant renforcée par une ou plusieurs plaques en métal liées à cette matière plastique par surmoulage ou collage.

FR 3 014 401 décrit un tablier avant pour caisse de véhicule automobile destiné à séparer le compartiment moteur et l'habitacle du véhicule, constitué par l'assemblage entre elles d'une pluralité de pièces unitaires monolithiques chacune formée dans une matière composite à base d'un mélange entre un renfort et une matrice.

EP 2 716 527 divulgue un dispositif pour fixer la colonne de direction d'un véhicule automobile à la traverse de planche de bord et à une partie de la structure de la caisse du véhicule.

On connaît également de FR 2 995 862 une traverse de planche de bord pour véhicule automobile constituée de deux tubes reliés axialement l'un à l'autre et une jambe de force s'étendant dans une direction transversale par rapport à la traverse, les tubes et la jambe de force étant réalisés en matériau composite.

D'autres documents de brevet décrivent des matériaux composites utilisés au moins partiellement pour la réalisation de pièces automobiles telles que planche de bord, traverse pour tableau de bord, tableau de bord, tablier avant, parmi lesquels EP 2 597 017, FR 2 975 961, EP 2 377 747, EP 2 332 809, EP 2 179 910, WO 2010/017254, EP 2 113 448, WO 2005/037632, WO 01/70558. Certaines publications décrivent spécifiquement des structures de support pour une colonne de direction, notamment JP 2015182736 ou EP 2 896 545.

US 8 623 159 décrit un procédé comprenant la réalisation à plat d'une préforme comprenant des noyaux de mousse.

Par ailleurs, dans le domaine des procédés de fabrication de pièces à partir de préformes, US 2014/0300138 enseigne de réaliser une partie de plancher automobile en assemblant plusieurs préformes sèches dans un moule avant leur imprégnation par infusion de résine. Ce procédé de l'art antérieur est difficile à automatiser et ne permet pas d'atteindre économiquement une cadence de production élevée compatible avec les grandes séries.

On connaît également de WO 2015/170016 un procédé de réalisation de préformes par application sans compactage de fibres continues, de préférence unidirectionnelles, dans des orientations définies. Un tel procédé, qui réalise un drapage couche par couche, convient, notamment de par sa maniabilité et sa précision, pour des applications en petite série, du sur-mesure et du haut de gamme. Ce procédé, en revanche, ne convient pas, par sa faible cadence et son coût élevé de mise en œuvre, pour la production en grande série. En effet, le principe de ces procédés est de draper, typiquement sur des moules ou des pièces (non planes), couche par couche et à l'aide de têtes de drapage spécifiques portées par un robot, des plis d'une seule épaisseur, chaque pli étant constitué de fibres plates continues (mèches) disposées côte à côte. La largeur de chaque pli, qui correspond à celle de la tête, est typiquement de 3 à 10 cm. Ces têtes connues de l'homme du métier ont une capacité de dépose de l'ordre de 1 à 5 kg/h.

Ainsi les procédés et dispositifs conformes à WO 2015/170016 ne sont pas du tout adaptés pour des pièces de grandes dimensions, typiquement de plusieurs mètres, avec une épaisseur de la préforme correspondant typiquement à au moins 3 à 5 couches et un taux de dépose souhaité élevé de l'ordre de 30 à 100 kg/h. En effet pour arriver à un tel taux de dépose, il faudrait utiliser un système très coûteux et complexe équipé de plusieurs robots et têtes.

De plus, dans un plan donné, la juxtaposition bord à bord de bandes assez étroites de fibres comme proposé par WO 2015/170016 apporte une résistance mécanique plus faible qu'une bande large de fibres continues.

De plus, ces têtes ne permettent pas l'utilisation de renforts (noyaux) en matériau suffisamment souple (déformable, thermoformable) dans le moule de formage, peu onéreux et capables, lors de l'étape de formage, d'ajuster leur forme entre les plis de la préforme. Le procédé du demandeur permet au contraire, comme décrit plus loin dans le texte, de préparer à plat des préformes sèches incorporant de tels noyaux (non préformés rigides) entre les plis, puis de placer ces préformes dans le moule de formage. On connaît enfin des procédés pour la fabrication de pièces à base de matériau composite, de type estampage, entraînant des pertes de matière et nécessitant des étapes de parachèvement très coûteuses. Ce type de procédé, réservé aux pièces haut de gamme et de petites séries, est incompatible avec les contraintes de coûts de la fabrication des grandes séries de pièces.

Malgré tout cet art antérieur connu, il existe encore un besoin pour parvenir à réaliser une pièce complexe en matériau composite à matrice organique, à une cadence de fabrication relativement élevée si cela est souhaité et à un coût inférieur ou comparable à celui d'une pièce métallique équivalente.

Il existe encore un intérêt pour élargir les possibilités esthétiques lors de la conception des planches de bord et réduire le nombre de pièces à assembler dans un véhicule automobile, le temps de montage et d'assemblage d'un véhicule automobile et/ou le volume de stockage des préformes.

### Procédé de fabrication

L'invention a ainsi pour objet, selon un premier aspect, un procédé de fabrication d'une pièce en matériau composite à matrice organique et renfort fibreux, comportant les étapes suivantes :
a) draper, de préférence de manière automatique, respectivement à plat ou en forme sur une empreinte tridimensionnelle, au moins une stratification comportant au moins un premier et un deuxième plis, de préférence secs, différents, au moins partiellement superposés, de manière à former une préforme, de préférence sèche, respectivement à plat ou tridimensionnelle, chaque pli étant fibreux, les plis différant entre eux par la structure, le positionnement sur la préforme, les fibres les constituant et/ou la géométrie du pli,
b) thermoformer la préforme, le thermoformage s'effectuant, lorsqu'elle a été drapée à plat à l'étape a), dans une empreinte tridimensionnelle d'un moule afin de lui conférer une forme en trois dimensions,
c) imprégner au sein d'un moule la préforme ainsi thermoformée par au moins un polymère, la préforme étant déplacée en cas de drapage à plat à l'étape a) du premier moule de thermoformage à un deuxième moule pour l'imprégnation.

Grâce à l'invention, on dispose d'un procédé de fabrication rapide, à partir d'une seule préforme, le procédé de drapage pouvant être automatisé, pour la réalisation de pièces composites complexes, y compris de pièces de grandes dimensions, par exemple de 5 à 8 m², ou de complexité de forme et/ou de structure, destinées au secteur automobile, aéronautique, ou à tout autre secteur industriel.

La combinaison desdits au moins deux plis différents dans la préforme permet de réaliser d'une seule pièce une préforme complexe, dont les caractéristiques mécaniques sont adaptées aux sollicitations ultérieures de la pièce.

La stratification comporte ainsi une pluralité de plis, au nombre d'au moins deux, dont au moins certains présentent avantageusement des formes différentes, notamment des dimensions différentes, pour être positionnés à des emplacements différents de la préforme. Cela peut permettre de renforcer certaines zones de la pièce, et/ou de s'adapter à une forme complexe de celle-ci. Ainsi, la pièce finale pourra avoir des zones renforcées par rapport à d'autres zones. Cela peut également permettre d'adapter ou de faire varier localement les propriétés d'élasticité ou autres propriétés mécaniques telles que rigidité et déformabilité, de différentes zones de la pièce en fonction des sollicitations mécaniques ultérieures de la pièce ainsi fabriquée. On peut ainsi obtenir une pièce avec des zones relativement élastiques ou déformables et d'autres zones rigides indéformables. On peut également jouer sur la nature différente des fibres en mêlant les fibres de verre et de carbone à certains endroits en fonction des contraintes mécaniques.

Par « préforme sèche », on désigne une préforme fibreuse comprenant entre 1% et 20% environ, notamment moins de 5 % environ, d'un polymère thermodurcissable ou thermoplastique, en pourcentage massique par rapport à la masse totale de la préforme. La préforme sèche est utilisée comme phase de renfort d'un matériau composite, la pièce correspondant à ladite préforme étant obtenue par l'imprégnation, notamment l'injection ou l'infusion, d'un polymère à l'état liquide ou pâteux dans ladite préforme sèche.

Le terme « pli sec » désigne un pli de fibres imprégné d'une faible quantité d'un polymère thermodurcissable ou thermoplastique, quantité comprise entre 1% et 20% environ, notamment inférieure à 5 % environ en masse par rapport à la masse totale du pli. Le polymère présent en faible quantité peut être saupoudré sous forme de poudre sur le pli ou peut former un voile entre deux couches du pli ou autre.

Dans tout le texte, le terme « empreinte », sauf indication particulière, désigne tant une forme en creux qu'une forme en relief.

Chaque pli peut présenter une structure choisie dans le groupe constitué par une structure linéique, notamment des fils ou des mèches, surfacique, notamment des non-tissés, des tissus, des rubans ou des mats, ou multidirectionnelle, notamment des tresses, des tissus complexes, des tissages multi-directionnels, notamment tri-directionnels ou plus.

Au moins un pli peut être disposé, c'est-à-dire déposé par drapage, sous forme de non-tissé, encore appelé en anglais Non-Crimp Fabrics (NCF). Dans ce cas, le pli comporte une pluralité de couches de fibres unidirectionnelles, disposées les unes sur les autres avec une orientation angulaire différente des fibres, par exemple selon une séquence 0/+-45°/90°. On dispose ainsi simultanément, par le drapage d'un seul pli, plusieurs couches contenues dans ce pli, ce qui permet d'avoir une meilleure cadence que lorsque qu'une seule couche, par exemple de fibres unidirectionnelles, est déposée à la fois. Lorsque les premier et deuxième plis sont réalisés en non-tissé, ils peuvent par exemple différer par l'orientation angulaire des couches qu'ils contiennent. Les couches formant le pli de non-tissé peuvent être reliées entre elles par des coutures.

En variante ou de manière additionnelle, au moins un pli peut être tissé. Dans ce cas, le pli est avantageusement monocouche.

Le terme « tissé » couvre des structures variées de tissage, de tressage, plus ou moins complexes, pouvant en particulier être tridimensionnelles. De manière connue en soi, le tissage peut être une toile, un sergé, un satin, un unidirectionnel, une fausse gaze ou autre.

On peut avoir une combinaison de pli(s) en non-tissé et de pli(s) tissé(s).

On peut également avoir une combinaison de pli(s) en non-tissé multicouche, qui convien(nen)t pour des zones ou pièces de géométrie moins complexe et de pli(s) monocouche tissé ou en non-tissé qui peu(ven)t convenir pour des zones ou pièces de géométrie plus complexes.

Les plis sont de préférence déformables. Le terme « pli déformable » désigne un pli composé de fibres continues arrangées selon des directions définies et assemblées sous la forme de tissu ou de non-tissé.

Les fibres constituant les plis peuvent être choisies dans le groupe constitué par les fibres de carbone, de verre, les fibres d'aramide, les fibres céramiques, les fibres de polyester, les fibres d'origine végétale, notamment les fibres de lin, de préférence les fibres de carbone ou de verre, et un mélange de celles-ci. Les fibres peuvent être continues ou courtes.

Un avantage de l'invention est qu'elle peut permettre d'utiliser des fibres non tissées NCF, qui forment une matière première à moindre coût par rapport à des fibres tissées. De plus, on peut choisir l'orientation des fibres pour le drapage, ce qui permet de maîtriser les propriétés mécaniques de la pièce, voire d'avoir des performances supérieures. D'une manière générale, on peut effectuer l'étape de drapage en choisissant les orientations des fibres des plis de manière à obtenir les propriétés cibles des différentes parties de la pièce.

Le procédé comporte avantageusement une étape préalable de conception de la pièce, de manière à prédéterminer le choix de la forme, de la ou des fibres, du positionnement et de la géométrie de chaque pli, en fonction des caractéristiques mécaniques recherchées pour la pièce.

Le procédé peut comporter une étape consistant à mettre en place, sur au moins une partie de la stratification, au moins un noyau.

Le procédé peut comporter l'étape de drapage d'une deuxième stratification comportant au moins un pli, afin de recouvrir au moins partiellement le noyau et la stratification.

Dans ce cas, on dispose d'une structure sandwich, pour au moins une partie de la pièce dans laquelle est présente le noyau.

Par « structure sandwich », on entend une structure formée d'une âme ou noyau en un premier matériau, prise en sandwich entre deux couches extérieures d'un ou de plusieurs autres matériaux. Le noyau peut être léger et présenter, en lui-même, de faibles caractéristiques mécaniques, tandis que les couches extérieures peuvent présenter de fortes caractéristiques mécaniques. L'épaisseur du noyau peut être supérieure à environ dix fois l'épaisseur des couches extérieures.

Selon un premier mode de réalisation, le procédé selon l'invention, de fabrication d'une pièce en matériau composite à matrice organique, comporte les étapes suivantes :
- draper de manière automatique à plat au moins une stratification comportant au moins un premier et un deuxième plis secs différents au moins partiellement superposés, chaque pli étant fibreux, de manière à former une préforme sèche à plat, les plis différant entre eux par la structure, le positionnement sur la préforme, les fibres les constituant et/ou la géométrie du pli,
- si besoin assembler lesdits au moins deux plis, notamment par au moins une couture,
- positionner la préforme à plat dans un premier moule,
- thermoformer la préforme afin de lui conférer une forme en trois dimensions,
- déplacer la préforme ainsi thermoformée dans un deuxième moule,
- imprégner la préforme thermoformée par au moins un polymère dans le deuxième moule afin de réaliser la pièce.

Selon un deuxième mode de réalisation, le procédé selon l'invention, de fabrication d'une pièce en matériau composite à matrice organique, comporte les étapes suivantes :
- draper sur une empreinte tridimensionnelle, non plane, au moins une stratification comportant au moins un premier et un deuxième plis différents, au moins partiellement superposés, chaque pli étant fibreux, de manière à former une préforme sèche tridimensionnelle, les plis différant entre eux par la structure, le positionnement sur la préforme, la ou les fibres les constituant et/ou la géométrie du pli,
- thermoformer la préforme tridimensionnelle,
- imprégner la préforme par au moins un polymère dans un moule afin de réaliser la pièce.

Quel que soit le mode de réalisation, le procédé peut être tel que défini ci-dessous.

Le thermoformage, ou préformage, que la préforme soit à plat ou en trois dimensions, peut être réalisé sur moule simple, avec chauffage par exemple par panneau radiant à une température inférieure ou égale à 100°C environ, la mise en forme ayant lieu de préférence sous faible pression, par exemple d'environ 1 bar, ce qui permet d'obtenir une structure fibreuse qui peut être introduite dans un moule pour l'imprégnation, par exemple l'injection. Le moule peut être en métal tel que de l'aluminium ou en matériau composite à matrice organique ou en résine.

Le thermoformage permet de comprimer la stratification pour l'amener à une épaisseur finale. Cette opération permet de fermer le moule pour l'imprégnation par le ou les polymères.

Dans le cas du thermoformage de la préforme en trois dimensions, cette étape peut avoir lieu dans l'empreinte tridimensionnelle utilisée pour le drapage, dans le moule utilisé pour l'imprégnation ou dans un autre moule.

L'empreinte tridimensionnelle peut former une partie du moule pour l'imprégnation par le ou les polymères. En variante, la préforme peut être déplacée de l'empreinte tridimensionnelle ou d'un autre moule vers un deuxième moule pour l'étape d'imprégnation.

Il est à noter qu'il est préférable que le moule pour le thermoformage soit différent du moule pour l'imprégnation. En effet, ces types de moules sont différents, ne travaillant pas selon les mêmes gammes de température et de pression. Les moules pour le thermoformage sont généralement beaucoup plus légers que les moules pour l'imprégnation.

Le procédé comporte avantageusement l'étape consistant à consolider le ou les polymères après l'étape d'imprégnation, par la solidification du ou des polymères lorsqu'il s'agit de polymères thermoplastiques ou par la cuisson du ou des polymères lorsqu'il s'agit de polymères thermodurcissables, et à démouler la pièce ainsi obtenue.

Le procédé peut être mis en œuvre en plusieurs endroits d'une même unité de fabrication ou de plusieurs unités de fabrication. Il peut également être mis en œuvre en enchaînant les étapes ou en les espaçant, dans le temps. Par exemple, plusieurs préformes thermoformées peuvent être réalisées, stockées notamment en étant empilées, et, ultérieurement, déplacées, une à une, dans un moule pour l'étape d'imprégnation. Le procédé selon l'invention permet, d'un point de vue industriel, de réaliser la préforme et son imprégnation de polymère dans des sites distants.

Lorsqu'elle a lieu, l'étape de couture permet de stabiliser la préforme, en maintenant les plis dans leur position de drapage, autorisant ainsi à manipuler celle-ci sans risque de décohésion ou de désalignement des plis. La couture permet de lier les plis sans entraver outre mesure leur capacité de déformation. La couture est avantageusement réalisée selon un contour prédéterminé, par exemple selon un contour de pliage de la préforme. La couture peut être réalisée en zigzag, de manière à assurer la cohésion des différents plis de la préforme sans dégrader l'aptitude à la déformation de la préforme qui lui est conférée par la nature des plis déposés. L'étape de couture peut avoir lieu, lorsqu'il y a une structure sandwich, après la mise en place du ou des noyaux et le drapage de la deuxième stratification.

Lorsque le drapage est réalisé sur une empreinte tridimensionnelle, non plane, une série de rouleaux peut être prévue dans l'outillage pour appliquer le drapage sur l'empreinte et former progressivement la préforme.

Lorsque présent(s), le ou les noyaux peuvent être en mousse, notamment en mousse de polyéthylène téréphtalate (PET), de préférence moulée. La mousse de PET présente plusieurs avantages dont un coût réduit, une résistance à la température de 200°C, une capacité à être thermoformée, ainsi que la possibilité d'être recyclée. Le ou les noyaux peuvent être percés d'une pluralité d'orifices d'un diamètre compris entre 1 mm et 5 mm, afin de faciliter l'étape d'imprégnation, notamment d'injection ou d'infusion, de polymère à travers lesdits noyaux.

Toujours dans ce cas, ledit au moins un noyau présente avantageusement une surface extérieure totale inférieure à celle d'au moins un des plis de manière à ne recouvrir que certaines zones prédéterminées de la stratification.

Au moins un pli peut être prédécoupé avant drapage selon des dimensions prédéterminées. Ainsi, on peut éviter de perdre de la matière par la génération de chutes de matière non utilisées, ce qui permet de réduire les coûts et la quantité de déchets. En effet, dans ce cas, la quantité juste nécessaire de matériau est utilisée. Un autre avantage lié à ce pré-découpage est qu'il permet d'éviter ou de minimiser le parachèvement, c'est-à-dire les étapes de finition de la pièce, telles que l'ébavurage, le détourage, la reprise pour faire des perçages, etc., après consolidation du ou des polymères, ces étapes pouvant s'avérer longues et coûteuses. Ainsi, grâce à l'invention, le temps de fabrication peut être réduit, tout ou partie de ces étapes de parachèvement étant évitées. En effet, la pièce obtenue par le procédé est dite de forme définitive, dite « net-shape » en anglais, ou de forme quasi définitive, dite « near net-shape » en anglais.

Chaque pli peut comporter un grammage compris entre 100g/m² et 5000g/m², notamment relativement grand, par exemple supérieur à 3000g/m². Cela permet de réduire la durée des opérations de drapage. L'épaisseur d'un pli peut être ainsi comprise entre 0,3 mm et 5 mm, notamment supérieure à 3 mm.

Au moins l'un des plis peut jouer le rôle de renfort de certaines zones de la préforme.

Ledit au moins un polymère imprégnant la préforme peut être choisi parmi les résines thermodurcissables, telles que les résines de polyesters insaturés, les résines vinylesters, les résines époxydes, les résines acryliques, les résines phénoliques, les résines polyimides, les résines bismaléïmides, les résines polystyrylpyridine, et les résines thermoplastiques telles que les polycarbonates, les polyamides, notamment les polyamides aliphatiques, tels que le polycaprolactame PA 6, le polyhexaméthylène adipamide PA 6.6.

Il est à noter que, grâce à l'invention, il est possible d'utiliser des matériaux, notamment un ou des polymères d'imprégnation de la préforme, peu coûteux. Par exemple, on peut utiliser des résines époxydes thermodurcissables moins chères que des résines thermoplastiques à haute performance, étant entendu que ces dernières peuvent toutefois être également utilisées.

L'étape d'imprégnation de la préforme sèche par un polymère peut mettre en œuvre une méthode choisie dans le groupe constitué par le moulage par transfert de résine (RTM), le moulage par transfert de résine léger (RTM Light), le moulage par transfert de résine à haute pression (HP-RTM), le moulage par transfert de résine thermoplastique (T-RTM), le moulage par transfert de résine avec dépôt de résine liquide à moule ouvert (RTM/ Liquid Compression Molding LCM), le thermo-estampage thermoplastique, mettant en œuvre la préforme sèche et une matrice thermoplastique sous forme de poudre ou de plaque, le moulage par compression-transfert et le moulage par infusion.

Au moins l'une des étapes de drapage est avantageusement mise en œuvre par copiage d'un profil d'outillage ou par programmation de robot. Lorsque le drapage est mis en œuvre par copiage, le robot n'est pas programmé mais suit une marque ou profil sur l'outillage. Cela permet de changer rapidement de référence de pièce, sans avoir à modifier un programme machine. C'est l'outillage lui-même qui guide la trajectoire du robot.

Pour la réalisation des éventuels perçages nécessaires à la fixation d'autres pièces, le procédé peut comprendre une étape de perçage de la préforme à l'aide d'au moins une aiguille avant imprégnation de la préforme par le polymère. Dans ce cas, le moule d'imprégnation peut comporter au moins une aiguille mobile traversant la ou les stratifications, et éventuellement le noyau. On réalise alors, au niveau du perçage, un fût en résine d'injection, pultrudé ou mécanique. Dans les zones monolithiques, l'utilisation d'aiguilles dans le moule permet de réaliser des trous directement au moulage. Dans le cas d'une structure sandwich, il peut être nécessaire de renforcer le trou. Pour cela, une proposition consiste à prévoir un évidement local du matériau d'âme qui se remplira de polymère pour créer un fût liant les plis. Il est également possible d'équiper le matériau d'âme ou noyau de fûts pultrudés qui rempliront la même fonction.

On peut alternativement rapporter un ou plusieurs inserts, notamment métalliques ou thermoplastiques dans la préforme.

Grâce au procédé selon l'invention, on peut réaliser différentes pièces destinées par exemple au secteur automobile, de manière automatisée, à cadence élevée, avec un espace de stockage limité. On peut par exemple réaliser une pièce à l'aide du procédé décrit ci-dessus, en une durée comprise entre 2 min et 5 min environ, notamment en moins de 200s environ, dont par exemple 90 s de réalisation de la préforme et 90 s d'imprégnation de la préforme par au moins un polymère.

De manière plus large, le procédé selon l'invention permet de par l'assemblage de sous-ensembles de géométries et matériaux très variés et différents, d'apporter différentes formes de fonctionnalisation de la pièce, comme décrit ci-après.

Selon des réalisations, le positionnement des plis entre eux est défini de manière à ménager au moins une zone, ayant une fonction, entre les plis.

Par exemple, au moins un espace vide laissé volontairement entre des plis ou des stratifications de plis délimitent au moins une zone capable, à l'issue du procédé de formage (thermoformage) puis injection, de former au moins une cavité de circulation d'un fluide (fluide de chauffage ou fluide de refroidissement par exemple) au sein de la pièce finie. Cela permet d'éviter d'ajouter, par un assemblage qui serait complexe et fragile (soudage ou autre), des pièces supplémentaires (tubes, serpentins ...) destinées à cette circulation de fluide.

Au moins une telle zone non occupée par des plis ou stratifications de plis peut aussi délimiter au moins une cavité ou une saillie de géométrie adaptée capable de recevoir au moins une pièce que l'on souhaite associer à la pièce finale là aussi sans opération d'assemblage complexe (soudage ou autre). Par exemple, la pièce finie est un ensemble formant pack/bac de réception d'éléments producteurs d'énergie. Par exemple, la pièce est une batterie encore appelée « pack batterie » pour le secteur automobile, se présentant comme un coffre en un matériau composite par exemple thermoplastique (avec renfort typiquement en fibres longues), ménageant grâce à cette ou ces cavités des sites (de type mâle ou femelle) de réception de batteries (par exemple 30 à 50 cellules sensiblement verticalement pour un pack d'un mètre de long). Le cas échéant, cette variante est combinée avec la précédente (circulation de fluides) pour apporter en plus la fonctionnalité refroidissement du pack.

Ainsi, selon ces deux modes de réalisation, le drapage des plis est défini de manière à ménager, entre les plis, au moins une zone ayant une fonction, ladite au moins une zone ayant une fonction étant une cavité de circulation d'un fluide au sein de la pièce finie et/ou ladite au moins une zone ayant une fonction étant une cavité ou une saillie de géométrie adaptée capable de recevoir un élément que l'on souhaite associer à la pièce finale.

Selon d'autres réalisations, le choix du matériau lui-même confère en outre une fonctionnalité particulière. Par exemple, l'utilisation d'au moins un pli en tissu de fibres de carbone apporte une fonction de conduction ou de dissipation de chaleur. En reprenant l'exemple du « pack batterie », la préforme de la pièce peut comprendre au moins un pli en tissu de fibres de carbone localisées aux endroits dans lesquels la fonction de dissipation est recherchée. Par exemple, ces fibres de carbone sont obtenues à partir de PAN (polyacrylonitrile) ou de précurseurs biosourcés. Par exemple, le procédé utilisera au moins un pli en tissu de précurseur ayant subi une étape de carbonisation : le tissu de précurseur préparé subit une étape de carbonisation pour donner un tissu en fibres de carbone qui est utilisé en tant que pli pour la fabrication de la préforme tel que décrit dans la présente demande. Dans ce cas, on utilise, dans le procédé selon l'invention, au moins un pli en tissu de fibres de carbone pour apporter une fonction de conduction ou de dissipation de chaleur.

Selon d'autres réalisations, la fonctionnalisation de la préforme est apportée par l'insertion dans la préforme d'au moins un capteur, notamment de plusieurs capteurs, qui sont des éléments rapportés « actifs » spécifiques adaptés pour résister aux contraintes du procédé décrit dans la présente demande, et/ou des zones ou des éléments rapportés « passifs » dont l'état reflète l'état de santé de la pièce et/ou du matériau.

### Installation

L'invention a encore pour objet une installation pour la mise en œuvre du procédé tel que défini plus haut. Une telle installation comporte, par exemple, au moins une zone de drapage, à plat ou en forme, une zone de thermoformage ou préformage et une zone d'imprégnation à l'aide d'au moins un polymère, par exemple par injection.

### Support de colonne

L'invention a encore pour objet, selon un autre de ses aspects, indépendamment ou en combinaison avec tout ou partie de ce qui précède, un support de colonne de direction pour véhicule automobile, comportant une partie supérieure en matériau composite à matrice organique, pouvant présenter au moins partiellement une structure sandwich, configurée pour maintenir à l'avant la colonne de direction, et conformée pour se fixer à l'arrière sur la traverse inférieure de baie du véhicule. La partie supérieure présente avantageusement au moins partiellement une structure sandwich, de manière à former une zone rigide assurant la position du volant.

Les expressions « à l'avant » et « à l'arrière », « vers le bas » se réfèrent à un conducteur présent dans le véhicule final assis dans le siège conducteur face au volant. Le côté « avant » est ainsi le plus près du conducteur, tandis que le côté « arrière » est le plus éloigné de lui, « vers le bas » désignant une direction allant vers ses pieds.

Selon un mode de réalisation, le support est réalisé à l'aide du procédé tel que défini plus haut, notamment comprenant l'étape de drapage à plat. Le support est dans ce cas un exemple de pièce réalisée selon ce procédé.

Le support peut comporter, outre la partie supérieure, une partie inférieure en matériau composite à matrice organique, prolongeant vers le bas et à l'arrière la partie supérieure et conformée pour se fixer sur le tablier du véhicule et porter le pédalier du véhicule. Dans ce cas, la partie inférieure peut être réalisée avec la partie supérieure sous forme monolithique. La partie inférieure peut ne pas être réalisée sous forme de structure sandwich, ne comportant pas de noyau(x) entre les stratifications. La partie inférieure peut être réalisée pour remplacer partie du tablier du véhicule et présenter une rigidité similaire à celle d'un tablier en acier. Elle peut être prévue pour se déformer en cas de choc frontal.

Le support peut comporter une jambe de force, notamment métallique, de préférence en acier, s'étendant vers le bas entre la partie supérieure, à l'avant, et le tablier du véhicule ou la partie inférieure du support. Une telle jambe de force, fixée mécaniquement à la partie supérieure du support de colonne, est configurée, lorsque présente, pour reprendre les efforts exceptionnels au niveau du volant, assurer une rigidité en vibratoire et cette jambe de force est avantageusement dimensionnée de manière à flamber en cas de choc frontal. La jambe de force peut, en variante, être réalisée en matériau composite à matrice organique.

Le support de colonne peut être pré-monté avec le pédalier du véhicule et/ou la colonne de direction, avant montage dans le véhicule.

### Traverse inférieure de baie

L'invention a encore pour objet, selon un autre de ses aspects, indépendamment ou en combinaison avec tout ou partie de ce qui précède, une traverse inférieure de baie, destinée à s'étendre sur toute la largeur de la partie intérieure d'un véhicule, réalisée en un matériau composite à matrice polymère, pouvant présenter au moins partiellement une structure sandwich, réalisée selon le procédé tel que défini plus haut.

Pour obtenir une telle pièce, le procédé mis en œuvre peut comporter le drapage sur une empreinte tridimensionnelle présentant la forme souhaitée pour la pièce. La forme de la traverse inférieure de baie peut être contrainte par la forme en double courbure du pare-brise, ce qui peut empêcher de réaliser un drapage à plat. Le développé de la traverse inférieure de baie est avantageusement constant, ce qui peut permettre de réaliser le drapage de manière automatique.

La traverse inférieure de baie est avantageusement destinée à être fixée à l'arrière de la partie supérieure du support de colonne de direction tel que défini plus haut.

La traverse inférieure de baie présente avantageusement une structure sandwich dans la zone de fixation avec le support de colonne. Sous cette zone de fixation, la traverse inférieure de baie se prolonge avantageusement par une portion, non en structure sandwich, plus souple, laquelle portion peut plier en cas de choc frontal.

### Ensemble support de colonne de direction et traverse inférieure de baie

L'invention a encore pour objet, selon un autre de ses aspects, indépendamment ou en combinaison avec tout ou partie de ce qui précède, un ensemble support de colonne de direction tel que défini plus haut et traverse inférieure de baie telle que définie plus haut, destiné à être monté dans un véhicule automobile.

Dans ce cas, le support peut être pré-monté avec le pédalier et/ou la colonne de direction avant fixation à la traverse inférieure de baie, ou non.

### Véhicule automobile

L'invention a encore pour objet, selon un autre de ses aspects, indépendamment ou en combinaison avec tout ou partie de ce qui précède, un véhicule automobile comportant un support de colonne de direction tel que défini plus haut et une traverse inférieure de baie telle que définie plus haut, fixées ensemble, le support de colonne s'étendant sur une partie seulement de la longueur de la traverse inférieure de baie.

### Pièce

L'invention a encore pour objet toute pièce réalisée à l'aide du procédé tel que décrit plus haut, destinée au domaine automobile, aéronautique, construction navale ou autre secteur industriel. En particulier, la pièce peut consister en une lame de ressort composite à articulations pour liaison au sol de véhicule automobile.

### Echangeur thermique

L'invention a encore pour objet un échangeur thermique comportant au moins une pièce en matériau composite réalisée à l'aide du procédé tel que défini plus haut, comportant au moins une cavité de circulation d'un fluide au sein de la pièce finie

### Batterie

L'invention a encore pour objet une batterie comportant au moins une pièce en matériau composite réalisée à l'aide du procédé tel que défini plus haut, comportant au moins une cavité ou une saillie de géométrie adaptée capable de recevoir au moins un accumulateur électrique

### Figures

L'invention pourra être mieux comprise à la lecture de la description qui va suivre, d'exemples de mise en œuvre non limitatifs de celle-ci, et à l'examen du dessin annexé, sur lequel :
- la figure 1 représente de manière schématique et en perspective un exemple de support de colonne de direction conforme à l'invention, pré-monté,
- la figure 2 représente de manière schématique et partielle, en perspective, le support de colonne pré-monté de la figure 1 avec une traverse inférieure de baie conforme à l'invention,
- la figure 3 représente de manière schématique et partielle, en perspective, l'ensemble support de colonne et traverse inférieure de baie de la figure 2 monté sur le tablier d'un véhicule,
- la figure 4 représente en coupe transversale, de manière schématique et partielle, un exemple de support de colonne et de traverse inférieure de baie selon l'invention montés ensemble,
- la figure 5 représente de manière schématique et partielle le support de colonne et la traverse inférieure de baie de la figure 4 avant montage,
- la figure 6 représente un autre exemple de support de colonne et de traverse inférieure de baie selon l'invention après montage,
- la figure 7 représente l'ensemble support de colonne et traverse inférieure de baie de la figure 6 avant montage,
- la figure 8 représente l'ensemble de la figure 4 après un choc frontal,
- les figures 9 à 12 représentent de manière schématique et partielle le procédé de fabrication du support de colonne de la figure 1,
- la figure 13 représente l'étape de perçage du procédé de fabrication de la pièce,
- la figure 14 représente de manière schématique et en perspective la préforme après l'étape de perçage de la figure 13,
- la figure 15 représente de manière schématique et en perspective l'installation industrielle pour la mise en œuvre du procédé des figures 9 à 12,
- la figure 16 est une vue agrandie d'une partie de l'installation de la figure 15,
- la figure 17 représente de manière isolée, schématique et en section transversale, la traverse inférieure de baie conforme à l'invention,
- les figures 18 à 21 représentent de manière schématique les différentes étapes du procédé de fabrication de la traverse inférieure de baie de la figure 17,
- la figure 22 représente les différentes étapes de la fabrication de la traverse inférieure de baie, vues de manière schématique et en perspective,
- la figure 23 représente, de manière schématique et en perspective, l'outillage de drapage utilisé pour la réalisation de la traverse inférieure de baie,
- la figure 24 représente, de façon schématique et en perspective, l'installation pour la mise en œuvre du procédé des figures 18 à 21,
- la figure 25 est une vue agrandie d'une partie de l'installation de la figure 24,
- la figure 26 illustre, en coupe transversale de manière schématique et partielle un exemple d'échangeur thermique selon l'invention,
- la figure 27 illustre en coupe transversale, de manière schématique et partielle un exemple de batterie selon l'invention,
- la figure 28 illustre en coupe transversale, de manière schématique et partielle un exemple d'insertion de capteur dans une pièce réalisée conformément au procédé selon l'invention.

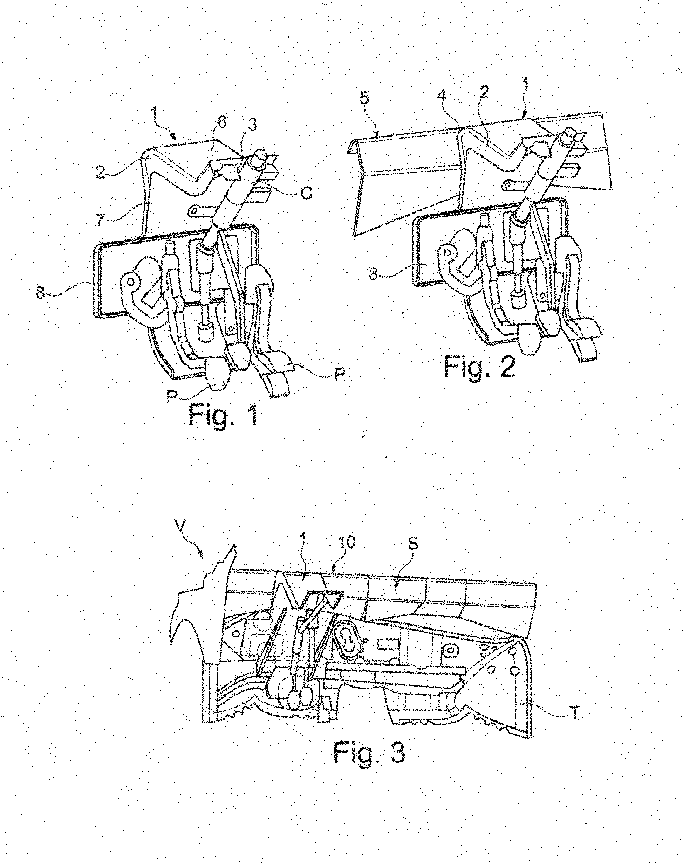

On a représenté sur la figure 1 un support 1 de colonne de direction conforme à un exemple de réalisation de l'invention, destiné à un véhicule automobile, sur lequel on a prémonté le pédalier P du véhicule et la colonne de direction C du véhicule.

Le support 1 de colonne de direction, dans cet exemple, est réalisé en matière composite à matrice organique, selon le procédé de fabrication décrit ci-après.

Le support 1 de colonne comporte une partie supérieure 2 en matériau composite à matrice organique présentant dans cet exemple au moins partiellement une structure sandwich, configurée pour maintenir à l'avant 3 la colonne de direction C. Comme visible sur la figure 2, la partie supérieure 2 est également conformée pour se fixer à l'arrière 4 sur la traverse inférieure de baie 5 du véhicule. Dans cet exemple, la partie supérieure 2 se présente en forme de L avec une partie relativement plane 6 s'étendant de l'avant 3 vers l'arrière 4 et une partie 7 s'étendant à l'arrière vers le bas.

Le support 1 comporte également, dans le prolongement de la partie 7, dans cet exemple, une partie inférieure 8 en forme sensiblement de croix incurvée, agencée pour porter le pédalier, comme visible sur les figures 1 à 3. La partie inférieure 8 est réalisée en matériau composite à matrice organique non pas sous forme de structure sandwich mais sous forme de stratification empilée réalisée de manière monolithique avec la partie supérieure 2. Cette partie inférieure 8 remplace dans cet exemple une partie du tablier en acier du véhicule auquel elle est destinée à se fixer et présente avantageusement une rigidité comparable à celle d'un tablier en acier.

On a représenté également sur le dessin une traverse inférieure de baie 5 conforme à un exemple de réalisation, visible sur les figures 2 et 3, fixée au support 1. La traverse inférieure de baie 5 s'étend transversalement sur toute la largeur du véhicule, présente une forme en double courbure épousant celle du pare-brise du véhicule. La fixation entre le support 1 et la traverse inférieure de baie 5 se fait avantageusement par vissage et/ou collage.

La figure 3 représente, disposé dans un véhicule V représenté très partiellement, l'ensemble 10 formé par le support 1, prémonté dans cet exemple avec le pédalier P et la colonne de direction C, et la traverse inférieure de baie 5. Le tout est monté sur le tablier T. Il est à noter que la forme et les propriétés mécaniques de la traverse inférieure de baie 5, dont la forme est un corps creux, permettent de se dispenser d'une traverse métallique, ce qui permet d'imaginer de nouveaux designs de planches de bord.

Par ailleurs, comparativement à des ensembles réalisés à partir de pièces métalliques, le nombre de pièces nécessaires pour remplir les mêmes fonctions est inférieur.

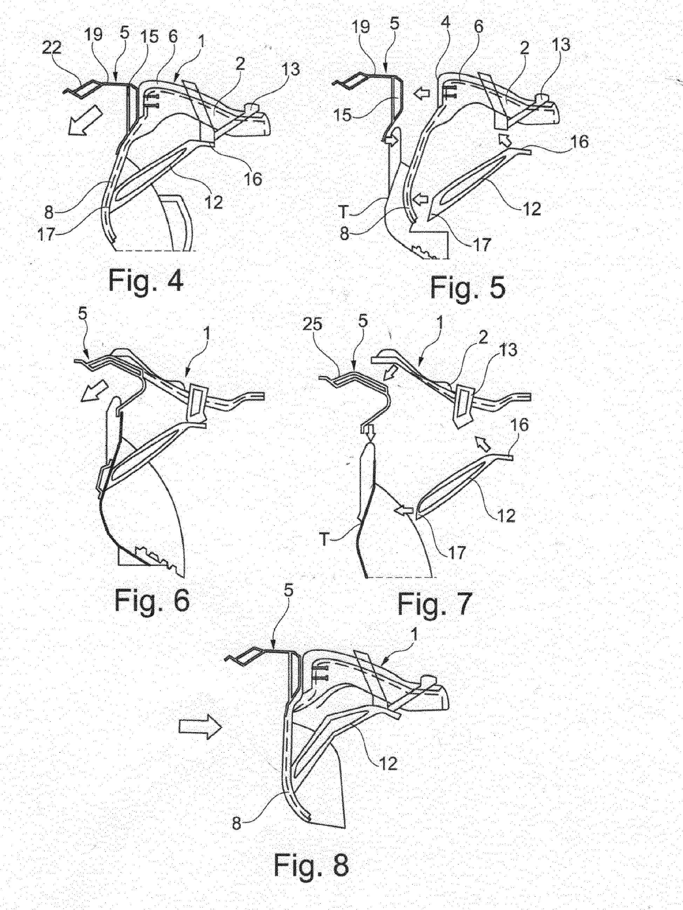

La traverse inférieure de baie 5 est réalisée dans un matériau composite à matrice organique, dans cet exemple partiellement en structure sandwich intégrant un ou plusieurs noyaux sur tout ou partie de sa longueur. Comme on peut le voir sur la figure 4, la traverse inférieure de baie 5 présente une forme, en section transversale, creuse, en forme sensiblement de U, sur toute sa longueur.

Comme visible également sur la figure 4, le support 1 de colonne comporte une jambe de force 12, réalisée au moins partiellement dans cet exemple en matériau métallique tel que de l'acier, fixée dans cet exemple d'une part, par une extrémité supérieure 16, à la partie supérieure 2 du support 1 de colonne via un système de fixation 13 et d'autre part, par une extrémité inférieure 17, à la partie inférieure 8 du support 1 de colonne.

La partie inférieure 8 est, quant à elle, fixée au tablier T métallique du véhicule comme visible en particulier sur la figure 5.

La traverse inférieure de baie 5 présente dans cet exemple une partie de fixation 15 en structure sandwich épousant, à l'arrière 4 de la partie supérieure 2 du support de colonne 1, la forme de celle-ci. Cette partie de fixation 15 est sensiblement verticale. La traverse inférieure de baie 5 comporte en outre une partie supérieure 19 sensiblement horizontale, dans le prolongement de la partie plane 6 de la partie supérieure 2, ainsi qu'une portion renforcée en structure sandwich 22 s'étendant à l'arrière vers le bas sous le pare-brise du véhicule. La fixation et l'assemblage entre les différentes pièces se fait selon les flèches de la figure 5, par collage et/ou fixation mécanique, notamment par vissage.

Comme illustré sur la figure 8, la jambe de force 12 est configurée pour flamber en cas de choc frontal, et la partie inférieure 8 du support de colonne 1 est prévue pour se déformer également.

Un autre exemple de support 1 et de traverse inférieure de baie 5 a été illustré sur les figures 6 et 7. Dans cet exemple, la traverse inférieure de baie 5 comporte une unique zone de structure sandwich 25 s'étendant sous le support 1, lequel comporte uniquement une partie supérieure 2 et une jambe de force 12. Dans cet exemple, la jambe de force 12 est fixée par son extrémité supérieure 16 au système de fixation 13 et par son extrémité inférieure 17 au tablier T. De même, la traverse inférieure de baie 5 est fixée au support 1 et au tablier T comme visible sur la figure 7.

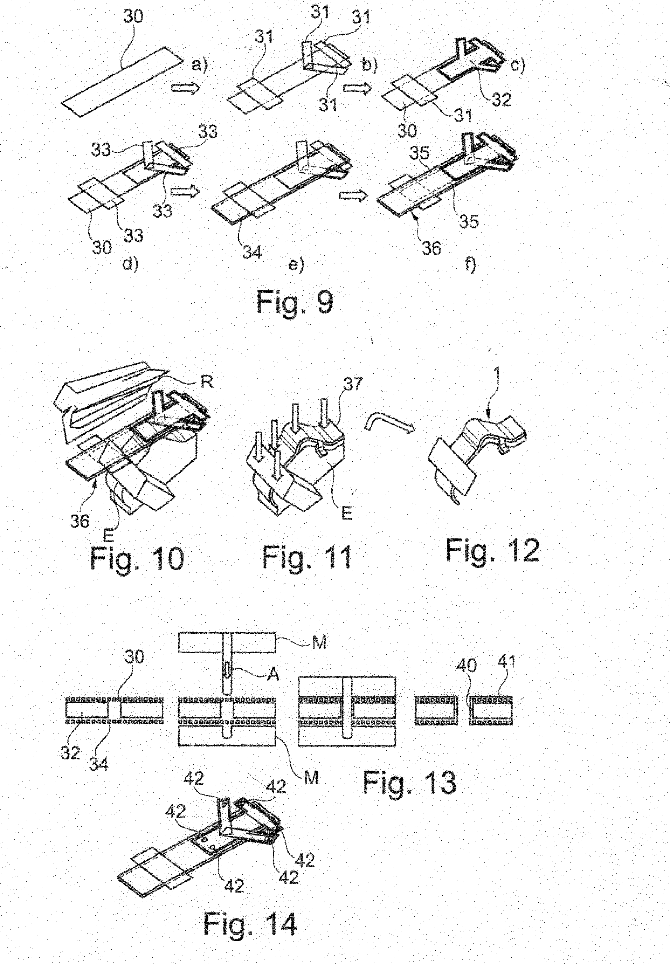

On a représenté, sur les figures 9 à 14, les différentes étapes du procédé de fabrication d'une pièce complexe en matériau composite à matrice organique, présentant dans cet exemple au moins partiellement une structure sandwich, pièce telle que le support de colonne 1 illustré sur les figures 1 à 3.

Sur la figure 9, on visualise une étape a) de drapage à plat d'une stratification comportant un premier pli 30 sec déformable de forme rectangulaire aux dimensions prédéterminées.

L'étape b) également illustrée sur la figure 9 consiste à draper à plat un deuxième pli 31 sec déformable avec plusieurs morceaux de dimensions et de positionnement prédéterminés et correspondant à la forme souhaitée. Comme visible, le deuxième pli 31 ne recouvre que partiellement le premier pli 30 et l'orientation et la forme des morceaux est différente de celui-ci. Le deuxième pli 31 peut être de nature et grammage identique ou différent du premier pli 30, en fonction par exemple des propriétés mécaniques recherchées. La stratification est, par exemple, maintenue sur la table de la machine à draper par dépression.

L'étape c) consiste à mettre en place sur une partie prédéterminée de la surface de la stratification constituée par les plis 30 et 31, un noyau 32 en mousse de polyéthylène téréphtalate. Le ou les noyaux 32 peuvent être collés sur la stratification.

On ne sort pas du cadre de l'invention si le noyau n'est pas en mousse de PET ou s'il n'y a pas de noyau. Tout autre matériau adapté au procédé peut être utilisé, y compris un insert en métal, par exemple réalisé à partir de tôles mises en forme et/ou de fonderie, de manière à avoir une fonction adaptée à l'application : matériau d'amortissement, de résistance, d'isolation phonique ou thermique, matériau conducteur ou isolant par exemple.

L'étape d) qui suit consiste à draper à plat une deuxième stratification comportant à nouveau un pli 33 sec déformable correspondant au pli 31, au moins pour la forme.

Dans une étape e), un pli 34 sec déformable, identique au moins pour la forme au pli 30, est drapé à plat, formant avec le pli 33 la deuxième stratification. La souplesse relative du noyau ne gêne pas le drapage de ces plis 33 et 34. Selon une variante de réalisation, les plis 33 et 34 constituant la deuxième stratification sont stabilisés sur la préforme par l'activation thermique d'un polymère, par exemple un polymère thermoplastique, poudré sur lesdits plis, ou par pulvérisation de colle.

A cette étape e), on visualise clairement le fait qu'une partie, en l'espèce la partie supérieure 2 du support 1 de colonne est réalisée sous forme de structure sandwich tandis que l'autre, à savoir la partie inférieure 8 du support 1 de colonne, est réalisée de manière monolithique avec la partie supérieure 2 mais dépourvue de noyau et donc de structure sandwich.

Les plis 30, 31, 33 et 34 sont avantageusement dans cet exemple des plis de NCF non tissés, de grammage choisi de manière à obtenir la rigidité souhaitée sans multiplier le nombre de plis nécessaires. Par exemple, un pli de NCF, utilisé pour la réalisation du support 1 de colonne ou pour toute autre pièce réalisée selon le procédé selon l'invention, comprend une première couche de fibres de carbone orientées à +45°, une deuxième couche de fibres d'aramide orientées à 0°, une troisième couche de fibres de carbone orientées à -45° sans que cet exemple soit limitatif ou exhaustif. Ainsi, la nature des fibres drapées est adaptée pour répondre aux besoins de tenue mécanique vis-à-vis des sollicitations lors de l'utilisation de la pièce réalisée et aux besoins en situation de sollicitation exceptionnelle, comme en présence d'un choc ou d'une pénétration d'un corps étranger. On ne sort pas du cadre de l'invention si la préforme comprend par exemple des fibres de verre, de carbone, de kevlar ou des fibres naturelles, entre autres.

Dans une étape f), on réalise au moins une couture 35 des plis de manière à maintenir ensemble les deux stratifications. La couture 35, de préférence réalisée en zigzag, peut suivre le contour du ou des noyaux de manière à permettre la séparation des stratifications de part et d'autre du ou des noyaux en renforçant cette zone de séparation vis-à-vis du pelage. En variante ou de manière additionnelle, la couture 35 peut constituer une ou des lignes de pliage de la préforme. L'emplacement de la couture 35 est déterminé par exemple par l'expérience ou la simulation. La couture peut être réalisée par un système de couture liant les plis entre eux pour fixer leur position. Un tel système peut être à deux aiguilles ou une aiguille courbe. Dans les deux cas, on prévoit une zone tampon sous la préforme capable d'accueillir les aiguilles. La vitesse de réalisation de la couture peut être d'environ 1400 points/min, soit environ 10 cm/s.

Dans une variante de réalisation non illustrée, la ou les coutures les plus sollicitées sont couvertes par des bandes de fibres unidirectionnelles, par exemple de fibres de carbone afin de les renforcer. Les fibres desdites bandes sont orientées sensiblement parallèlement à la direction générale de progression des coutures qu'elles recouvrent.

On obtient alors une préforme sèche à plat 36. Comme illustré sur la figure 10, la préforme sèche à plat 36 obtenue à l'étape f) est déplacée dans une empreinte tridimensionnelle E d'un moule et un panneau radiant R la chauffe à température d'environ 100°C, de telle sorte que, comme illustré sur la figure 11, la préforme épouse la forme de l'empreinte E.

La préforme thermoformée 37 ainsi obtenue est ensuite déplacée dans un deuxième moule, non visible sur les figures, dans lequel on l'imprègne d'au moins un polymère afin de réaliser la pièce, visible sur la figure 12, constituant dans cet exemple le support 1 décrit précédemment. L'étape d'imprégnation peut de manière connue en soi consister en une étape de moulage par injection de matière, du type moulage par transfert de résine RTM, moulage par transfert de résine léger (dit RTM light), à haute pression HP-RTM, par transfert de résine thermoplastique T-RTM ou autre. Le moulage peut également être de type compression transfert, mettant par exemple en œuvre un ou des polymères thermoplastiques en feuille ou en poudre, ou autre type, comportant par exemple une étape d'infusion.

Le polymère utilisé pour l'imprégnation peut être une résine thermodurcissable ou thermoplastique.

Selon un exemple de réalisation non illustré, le deuxième moule comprend deux parties et des moyens d'étanchéité de sorte que, lorsque le moule est fermé, lesdites deux parties définissent une cavité étanche dans laquelle se trouve la préforme sèche. Le moule comporte des moyens de tirage au vide de ladite cavité, et selon un exemple de réalisation, des moyens de chauffage de chaque partie du moule. Selon des exemples de réalisation différents, le chauffage des deux parties du moule est réalisé par la circulation d'un fluide, par des résistances électriques ou par induction. La préforme étant tirée au vide dans la cavité du moule, des canaux permettent d'injecter un polymère dans la préforme, de manière à l'imprégner. Cette injection est réalisée à une température adaptée au polymère utilisé. L'injection peut être réalisée sous forte pression, par exemple d'environ 30 bars, et à haute température, notamment comprise entre 120°C et 180°C. Le moule peut être métallique, notamment en acier. Selon un exemple de réalisation, des polymères de nature différente sont injectés dans la partie supérieure et dans la partie inférieure du moule et/ou dans des zones spécifiques des parties supérieure et/ou inférieure, ceci afin de conférer des propriétés adaptées à la pièce en fonction des modes de sollicitation qu'elle subit.

Après consolidation de la pièce 1 par la solidification du polymère lorsqu'il s'agit d'un polymère thermoplastique ou par la cuisson du polymère lorsqu'il s'agit d'un polymère thermodurcissable, la pièce 1 est démoulée. Un simple ébavurage, et non un usinage, peut être réalisé pour finir la pièce 1.

Avec un tel procédé, la cadence de fabrication d'une pièce peut être inférieure, en temps cumulé, à 200 s, les étapes de drapage et d'imprégnation, notamment injection, nécessitant chacune 90 s.

On a représenté sur les figures 13 et 14, une étape de perçage de la préforme pouvant avoir lieu lors de la fabrication de celle-ci. Le moule M comporte une aiguille mobile A qui est insérée au travers des plis 30 et 34 et éventuellement du noyau 32 comme visible. Lors de l'injection de matière, le polymère d'imprégnation formant la matrice 41 de la pièce 1 vient également créer un fût 40 entourant le perçage. On visualise sur la figure 14 les emplacements de perçage 42 prévus dans la pièce 1 et pouvant, dans un autre mode de réalisation, être réalisés par mise en place d'inserts métalliques, préexistants dans le matériau du ou des noyaux.

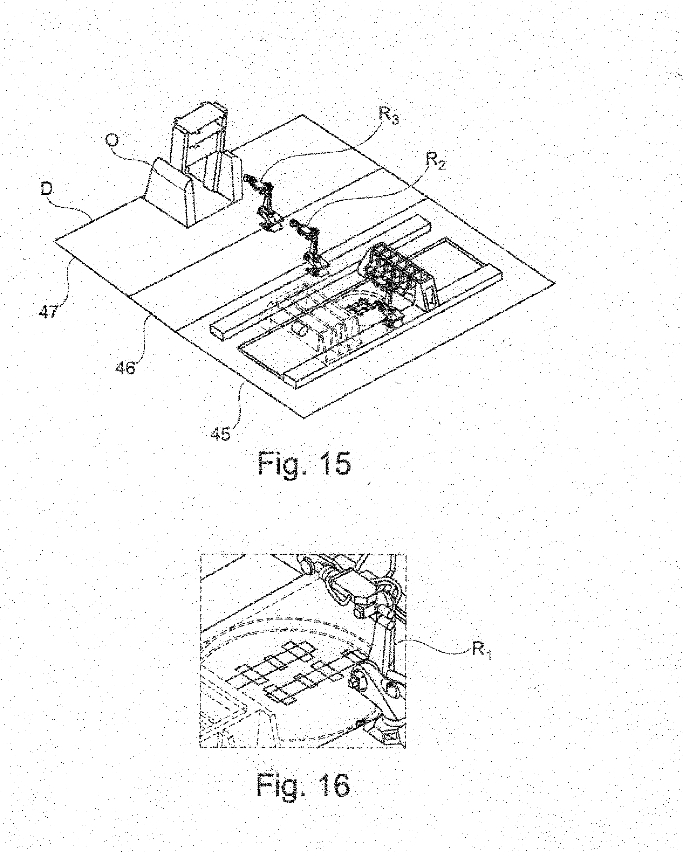

Une installation D pour la mise en œuvre du procédé des figures 9 à 14 a été illustrée sur les figures 15 et 16. Sur la figure 15, on visualise une première zone de drapage à plat 45, une deuxième zone de préformage 46 ou thermoformage, et enfin une troisième zone d'imprégnation 47 par un polymère, par exemple d'injection. La zone de drapage à plat 45 est davantage visible sur la figure 16, illustrant notamment le fait que quatre préformes peuvent être réalisées, notamment drapées, simultanément avec cette installation D, grâce à l'usage dans cet exemple d'une presse d'injection de 300t.

Un robot R1 effectue le drapage à plat de manière automatique. Un deuxième robot R2 visible sur la figure 15 permet de déplacer les préformes à plat dans la deuxième zone 46, par exemple par un effecteur de préhension, à aiguilles ou à dépression, de préférence à aiguilles.

Sur la troisième zone 47, outre un robot R3 agencé pour le déplacement des préformes thermoformées vers la troisième zone 47, un outillage O incluant le moule pour l'imprégnation, notamment par injection, de polymère dans la préforme a été représenté. L'outillage est dans cet exemple un dispositif d'injection tel qu'une presse.

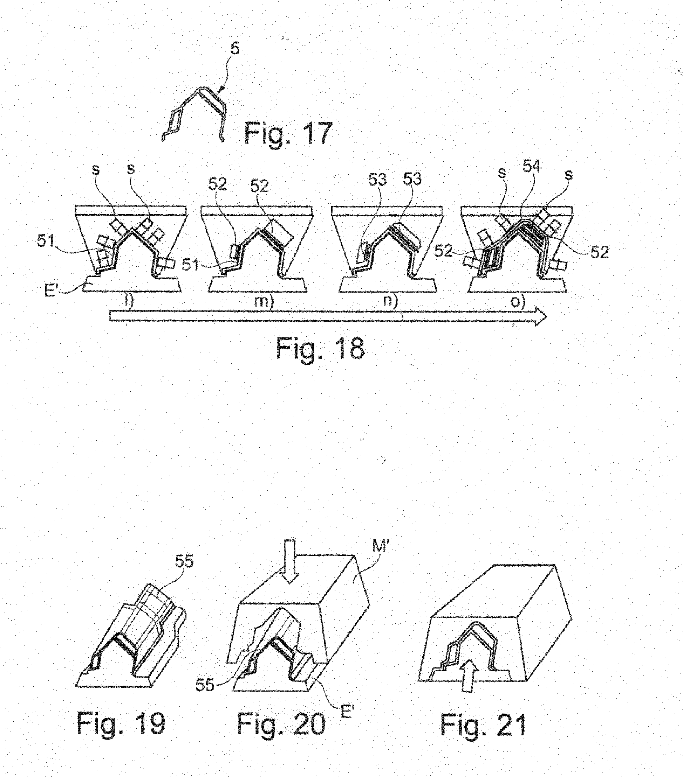

A la figure 17, on a représenté isolément la traverse inférieure de baie 5, en coupe transversale. Elle présente une forme creuse, de section ouverte. La structure sandwich permet de conférer de la rigidité à la pièce, en choisissant les fibres de carbone pour les parties ou pièces les plus sollicitées et les fibres de verre pour les parties ou pièces les moins sollicitées.

Le procédé de fabrication de celle-ci a été illustré sur les figures 18 à 23. Sur la figure 18, on visualise une étape 1) de drapage en forme sur une empreinte E' présentant une surface tridimensionnelle. Le drapage est effectué de manière automatique à l'aide de petits rouleaux S drapant petit à petit et en forme une stratification comprenant dans cet exemple un premier pli 51 sec déformable de NCF.

A l'étape m), des deuxièmes plis 52, constituant des renforts, sont positionnés sur certaines zones du premier pli 51. Ces plis 52 sont réalisés par exemple en tissé de fibres de carbone.

Puis, à l'étape n), des noyaux 53, au nombre de deux dans cet exemple, sont positionnés sur une partie de la première stratification 51, en l'espèce sur les plis 52.

A l'étape o), une deuxième stratification 54, comportant dans cet exemple un pli sec déformable de NCF, est réalisée de manière automatique en utilisant les rouleaux S. Il est à noter que les plis 52 ont préalablement été déposés également au-dessus des noyaux 53, comme visible à cette étape o).

Une étape de préformage, ou thermoformage, sous faible pression, de l'ordre de 1 bar, et à faible température, inférieure à 100°C, est mise en œuvre après l'étape o), dans un moule simple, par exemple en aluminium ou en matériau composite à matrice organique, ou en résine, ou autre.

La préforme tridimensionnelle 55 obtenue est visible en perspective sur la figure 19. La préforme 1 est déplacée dans un autre moule où, comme visible sur la figure 20, un contre-moule M'est disposé sur la préforme 55.

A l'étape illustrée sur la figure 21, une résine thermodurcissable est injectée dans le moule de manière à imprégner la préforme 55 d'un polymère. Après consolidation, dans cet exemple par cuisson de la résine, la pièce peut être démoulée.

Il est à noter que les caractéristiques décrites plus haut pour la préforme, les matériaux utilisés, les étapes du procédé ainsi que l'outillage, en regard des figures 9 à 12, mêmes si non reprises dans la description, peuvent être identiques, au moins pour partie d'entre elles, à celles de la préforme, des matériaux, de l'outillage, des étapes du procédé des figures 18 à 21.

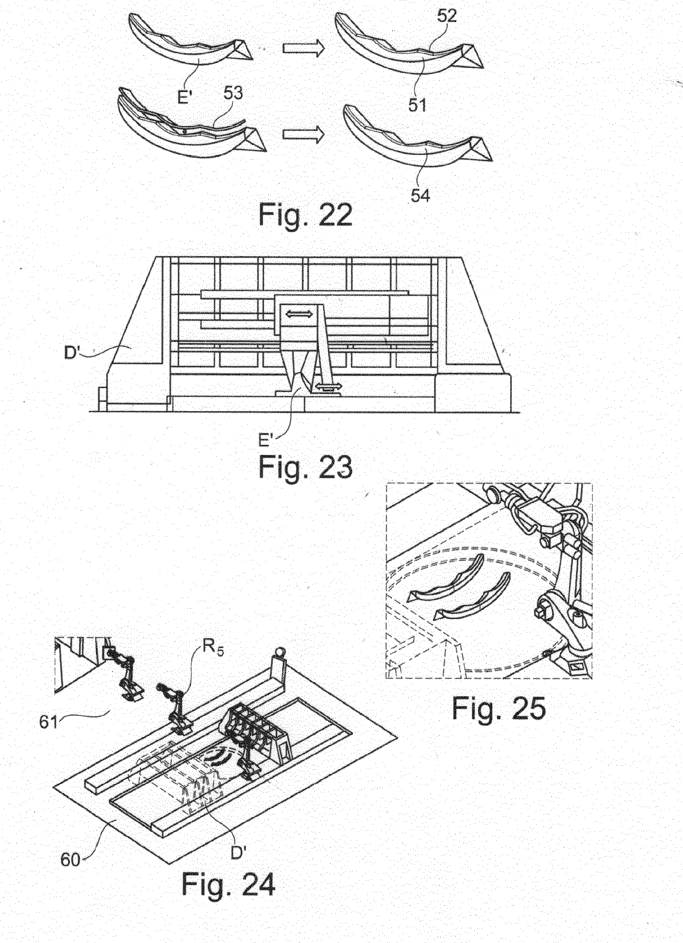

La figure 22 illustre les mêmes étapes que celles illustrées sur la figure 18, la pièce étant cependant vue en perspective. On voit l'outillage de drapage puis l'étape de drapage en forme du premier pli 51 et la pose des deuxièmes plis 52 puis l'ajout des noyaux 53 et enfin le drapage en forme d'une deuxième stratification avec les plis 52 et 54.

Un exemple d'outillage pouvant être utilisé pour le drapage en forme est représenté sur la figure 23. Pour le drapage de cette forme complexe, on utilise de préférence un drapage automatique par indexation du déplacement latéral des rouleaux de tissus dans une rainure de l'outillage, de profil adapté, plutôt qu'en programmant le robot. Cela permet de simplifier la programmation des moyens et le processus de changement de référence de pièce.

L'installation globale illustrée sur la figure 24 permet de réaliser simultanément deux préformes de traverse inférieure de baie. La zone de drapage 60 est juxtaposée à une zone d'injection 61, un robot R5 permettant de déplacer, avec un effecteur de préhension, les préformes réalisées grâce à l'outillage D.

Le procédé dont les étapes sont illustrées sur les figures 9 à 12 et 18 à 21 peut être mis en œuvre pour la réalisation de pièces autres qu'un support de colonne de direction ou une traverse inférieure de baie.

En particulier, un tel procédé peut permettre la réalisation à cadence élevée de toutes pièces complexes en matériau composite à matrice organique pouvant comporter au moins une partie en structure sandwich, qu'elles soient destinées au secteur automobile, aéronautique ou à d'autres secteurs industriels.

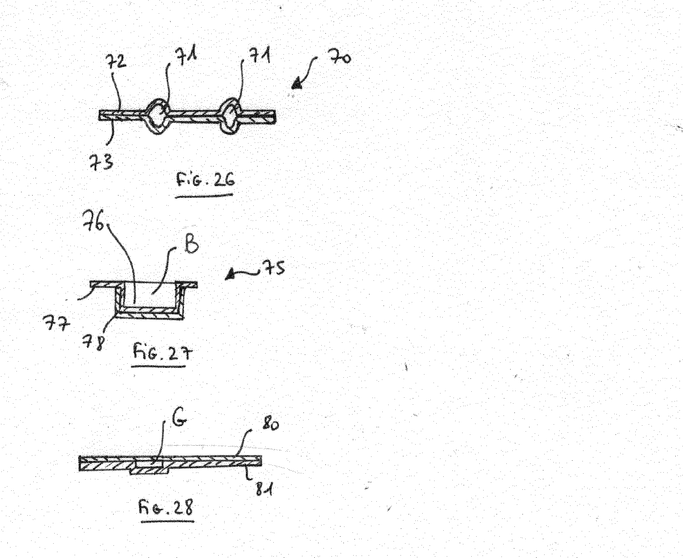

D'autres pièces réalisées à l'aide du procédé d'invention ont été illustrées sur les figures 26 et 27.

La figure 26 représente partiellement un échangeur thermique 70 comportant au moins une, dans cet exemple deux cavités 71 de circulation d'un fluide au sein de la pièce finie, réalisées entre les plis 72 et 73.

La figure 27 représente partiellement une batterie 75 comportant au moins une cavité 76 de géométrie adaptée, réalisée par deux plis 77 et 78, capable de recevoir au moins un accumulateur électrique B. Dans un exemple non illustré, au moins une saillie pourrait être réalisée.

On a illustré sur la figure 28 la possibilité d'intégrer un capteur G entre deux plis 80 et 81 dans une pièce réalisée selon le procédé conforme à l'invention.

Il est à noter que les étapes du procédé selon l'invention de réalisation de la ou des préformes peuvent être mises en œuvre indépendamment de l'étape finale d'imprégnation par un polymère afin de réaliser la pièce. Les préformes sèches peuvent être stockées, en étant empilées pour réduire la zone de stockage. L'étape finale du procédé peut être réalisée ultérieurement après un laps de temps pouvant aller par exemple de 1h jusqu'à un an. En variante, l'ensemble des étapes du procédé peuvent être mises en œuvre successivement, sans délai, c'est-à-dire inférieur à 1h environ, notamment de l'ordre de quelques minutes maximum.

## Revendications

1. Procédé de fabrication d'une pièce (1 ; 5) en matériau composite à matrice organique et renfort fibreux pour batterie (75), le procédé comportant les étapes suivantes :
a) draper de manière automatique, respectivement à plat ou en forme sur une empreinte tridimensionnelle (E'), au moins une stratification (30, 31 ; 51, 52) comportant au moins un premier et un deuxième plis secs, différents, au moins partiellement superposés, de manière à former une préforme sèche, respectivement à plat ou tridimensionnelle, chaque pli étant fibreux, les plis différant entre eux par la structure, le positionnement sur la préforme, les fibres les constituant et/ou la géométrie du pli, le positionnement des plis entre eux étant défini de manière à ménager au moins une zone, ayant une fonction, entre les plis,
b) thermoformer la préforme, le thermoformage s'effectuant, lorsqu'elle a été drapée à plat à l'étape a), dans une empreinte tridimensionnelle d'un premier moule afin de lui conférer une forme en trois dimensions,
c) imprégner au sein d'un moule la préforme ainsi thermoformée par au moins un polymère, la préforme étant déplacée en cas de drapage à plat à l'étape a) du premier moule de thermoformage à un deuxième moule pour l'imprégnation.

2. Procédé selon la revendication 1, chaque pli se présentant sous une structure choisie dans le groupe constitué par une structure linéique, notamment des fils ou des mèches, surfacique, notamment des non-tissés, des tissus, des rubans ou des mats, ou multidirectionnelle, notamment des tresses, des tissus complexes, des tissages multi-directionnels, notamment tri-directionnels ou plus, au moins un pli étant de préférence sous forme de non-tissé (NCF), au moins un pli étant de préférence prédécoupé avant drapage selon des dimensions prédéterminées.

3. Procédé selon l'une quelconque des revendications précédentes, comportant une étape consistant à mettre en place, sur au moins une partie de la stratification, au moins un noyau, ledit au moins un noyau (32 ; 53), de préférence réalisé en mousse, notamment en mousse de polyéthylène téréphtalate (PET), présentant une surface extérieure totale inférieure à celle d'au moins un des plis de manière à ne recouvrir que certaines zones prédéterminées de la stratification (30, 31 ; 51, 52).

4. Procédé selon la revendication précédente, comportant l'étape de drapage d'une deuxième stratification comportant au moins un pli (33, 34 ; 52, 54) afin de recouvrir au moins partiellement le noyau et la stratification.

5. Procédé selon l'une quelconque des revendications précédentes, dans lequel ladite au moins une zone ayant une fonction est une cavité (71) de circulation d'un fluide au sein de la pièce finie et/ou ladite au moins une zone ayant une fonction étant une cavité (76) ou une saillie de géométrie adaptée capable de recevoir un élément que l'on souhaite associer à la pièce finale.

6. Procédé selon la revendication 5, ladite au moins une zone ayant une fonction étant une cavité (76) ou une saillie de géométrie adaptée capable de recevoir un élément que l'on souhaite associer à la pièce finale, dans lequel la ou les cavités (76) forment des sites de type mâle ou femelle de réception de batteries.

7. Procédé selon la revendication 6, dans lequel les cavités comportent 30 à 50 cellules sensiblement verticalement pour une batterie d'un mètre de long.

8. Procédé selon l'une quelconque des revendications 5 à 7, ladite au moins une zone ayant une fonction étant une cavité de circulation d'un fluide au sein de la pièce finie de manière à permettre le refroidissement de la batterie.

9. Procédé selon l'une quelconque des revendications précédentes, dans lequel on utilise au moins un pli en tissu de fibres de carbone pour apporter une fonction de conduction ou de dissipation de chaleur, les fibres de carbone étant de préférence obtenues à partir de PAN (polyacrylonitrile) ou de précurseurs biosourcés.

10. Procédé selon la revendication précédente, dans lequel on utilise au moins un pli en tissu de précurseur ayant subi une étape de carbonisation.

11. Procédé selon l'une quelconque des revendications précédentes, dans lequel on insère dans la préforme au moins un capteur (G).

12. Batterie (75) comportant au moins une pièce en matériau composite réalisée à l'aide du procédé selon l'une quelconque des revendications 1 à 11, comportant au moins une cavité (76) ou une saillie de géométrie adaptée capable de recevoir au moins un accumulateur électrique (B).

13. Batterie selon la revendication 12, dans laquelle ladite au moins une zone ayant une fonction est une cavité de circulation d'un fluide au sein de la pièce finie de manière à permettre le refroidissement de la batterie.

14. Batterie selon l'une quelconque des revendications 12 et 13, comportant au moins un pli en tissu de fibres de carbone pour apporter une fonction de conduction ou de dissipation de chaleur, les fibres de carbone étant de préférence obtenues à partir de PAN (polyacrylonitrile) ou de précurseurs biosourcés.
